# EUROPEAN PATENT SPECIFICATION

(11) **EP 4 560 001 B1**
(45) Date of publication and mention of the grant of the patent: **01.07.2026**
(21) Application number: 24214700.7
(22) Date of filing: 22.11.2024
(51) Int. Cl.: C12G 1/028, B08B 9/08, C12G 1/02, B01F 27/091, B65D 90/00

(54) **APPARATUS FOR THE PRODUCTION OF BEVERAGES, AND RELATED METHOD**
VORRICHTUNG ZUR HERSTELLUNG VON GETRÄNKEN UND ENTSPRECHENDES VERFAHREN
APPAREIL POUR LA PRODUCTION DE BOISSONS ET MÉTHODE CORRESPONDANTE

(30) Priority: 24.11.2023 IT 202300025005
(43) Date of publication of application: 28.05.2025
(73) Proprietor: Capello, Elia, 12030 Cavallermaggiore (CN) (IT)
(72) Inventor: Capello, Elia, 12030 Cavallermaggiore (CN) (IT)
(74) Representative: Buzzi, Notaro & Antonielli d'Oulx S.p.A.

(56) References cited:
- EP-A1- 0 337 060
- EP-B1- 3 357 995
- WO-A1-2014/182671
- IT-A1- MI20 090 587
- US-A- 4 790 238

## Description

### Field of the Invention

The present invention generally relates to apparatus for the production of beverages, such as fermented or refermented beverages, with or without the presence of carbon dioxide.

### Background Art

With reference to processes for the production of fermented or refermented beverages, such as white wine, red wine, or beer, technical advancements have allowed better control of the organoleptic properties of these products, as well as the presence and concentration of certain substances.

In the winemaking sector, among the known sparkling processes, there are some that require fermentation or refermentation in an autoclave, according to the Martinotti or Charmat method. This latter method involves the use of an autoclave where operations such as filling with fermentable liquid, fermentation or refermentation of said liquid, and finally sedimentation of the so-called lees can be performed.

According to a known technique, the autoclave may include internal movable means configured to stir the liquid when the objective is to keep the lees in suspension (documents US4790238A, EP0337060A1 and ITMI20090587A1) .

There are also internal movable means inside the autoclave designed to promote the sedimentation of the lees when the objective is to separate the clear part of the liquid from the cloudy part that is eventually discarded.

Some known solutions are configured to isolate the lees sedimented at the bottom of the autoclave, to prevent the lees from accidentally mixing again with the clear part of the liquid contained in the autoclave. However, these solutions could be improved in terms of complexity, production costs, and the effectiveness of the isolation action.

The present invention arises from the desire to propose an alternative and improved solution in these respects.

### Object of the Invention

An object of the present invention is to create an apparatus for the production of fermented or refermented beverages, resulting extremely advantageous in terms of implementation costs and ease of use, while ensuring an extremely effective action of isolating the so-called lees at the bottom of the tank, preventing the solid components deposited on the bottom from returning to suspension.

A further object of the invention is to create an apparatus for the production of fermented or refermented beverages, which allows variation of the volume of liquid isolated at the bottom of the tank - by using simple and low-cost means -.

### Summary of the Invention

In view of these objects, the present invention relates to an apparatus and a related method as indicated in the appended claims. The claims form an integral part of the teaching provided in relation to the invention.

### Brief Description of the Drawings

The present invention will now be described in detail with reference to the attached drawings given purely by way of non-limiting example, in which:
- Figure 1A is a schematic front view illustrating a preferred embodiment of the apparatus according to the invention,
- Figure 1B is a schematic plan view illustrating the apparatus of the preceding figure,
- Figures 2-9 are schematic front views illustrating further embodiments of the invention.

### Detailed Description

In the following description, various specific details are illustrated to provide a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments. The reference to "an embodiment" in this description indicates that a particular configuration, structure, or characteristic described in relation to the embodiment is included in at least one embodiment. Therefore, phrases such as "in an embodiment," possibly present in various places in this description, do not necessarily refer to the same embodiment. Moreover, particular configurations, structures, or characteristics can be combined appropriately in one or more embodiments and/or associated with the embodiments differently from how illustrated here, so that, for example, a characteristic exemplified here in relation to a figure may be applied to one or more embodiments exemplified in a different figure.

The references illustrated here are for convenience only and do not delimit the scope of protection or the extent of the embodiments.

In the figures listed above, the reference 1 indicates an apparatus of the invention provided for the production of fermented or refermented beverages, with or without the presence of carbon dioxide, such as white wine, red wine, or beer.

The apparatus 1 may include a tank 2, substantially cylindrical, pressurized or not, made for example of stainless steel and provided at the base with appropriate supporting feet 3.

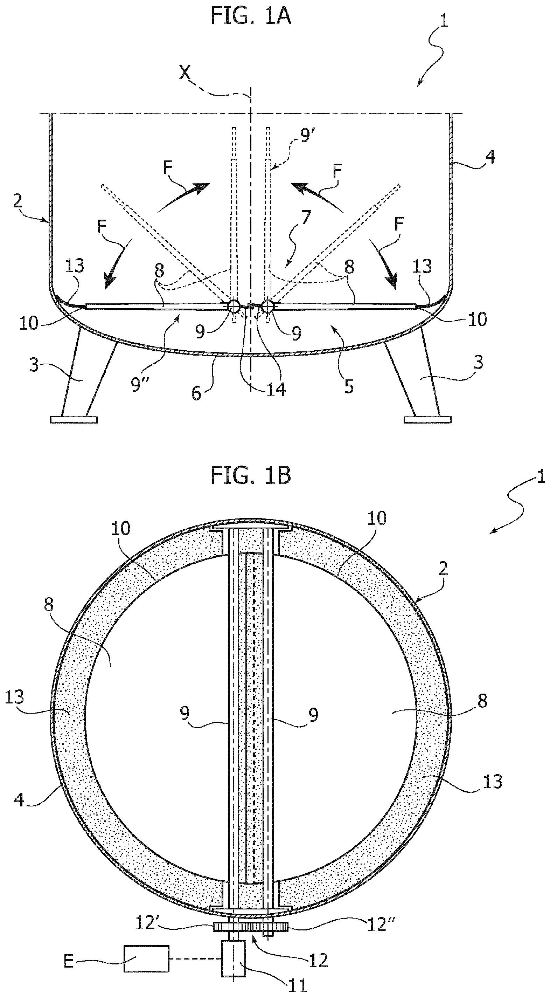

Preferred embodiments of the invention relate to a so-called vertical autoclave, i.e., equipped with a cylindrical tank 2 that extends mainly in a vertical direction along the axis X-X (indicated in Figure 1A).

The tank 2 includes a lateral wall 4 and an internal bottom area 5 delimited below by a lower wall 6.

In one or more embodiments, the lateral wall 4 is substantially cylindrical in shape. In one or more embodiments, the lateral wall 4 is made with other overall shapes (e.g., with rectilinear wall parts). In one or more embodiments, the lower wall 6 has a curvilinear shape. In one or more embodiments, the lower wall 6 is made with other overall shapes (e.g., conical).

The tank 2 may be equipped with a fixed or removable cover (not shown) provided, for example, at a top wall of the tank 2, opposite to the lower bottom wall 6, to open or close an appropriate opening for introducing the liquid into the tank 2.

According to an important feature of the present invention, the apparatus 1 includes a movable covering system 7 configured to isolate the lees sedimented at the bottom of the tank 2, to prevent the lees from accidentally mixing again with the clear part of the liquid contained in the tank 2. The movable covering system 7 includes two rigid plates 8 spaced inside the tank 2 and controllable in rotation around two respective axial shafts 9 extending along a horizontal direction perpendicular to said vertical direction. Note that the term "vertical direction" means the direction perpendicular to the lower and upper walls of the tank 2.

As detailed below, the plates 8 are controllable in rotation to be arranged like a lid over the internal bottom area 5 of the tank 2, to isolate the cloudy part of the liquid containing the so-called lees deposited on the bottom of the tank 2, and to prevent the cloudy part from mixing again with the clear part of the liquid.

According to a preferred feature illustrated in all the embodiments of the attached drawings, the plates 8 are symmetrical concerning a vertical mid-plane of the tank 2. According to what is illustrated in the elevation view of Figure 1B, the plates 8 have an overall semicircular shape; each plate 8 thus includes an upper main face, a lower main face opposite the upper face, an external end edge 10 - circular in shape -, and an internal end edge - straight -.

As illustrated, for example, in Figure 1A, which illustrates an embodiment with two symmetrical plates, the shafts 9 extend parallel and horizontally inside the tank 2, close to the internal bottom area 5 and straddling the vertical mid-plane of the tank 2. Note also that the shafts 9 can have respective end portions extending outside the tank 2 (as illustrated in Figure 1B) or be entirely extended inside the tank 2.

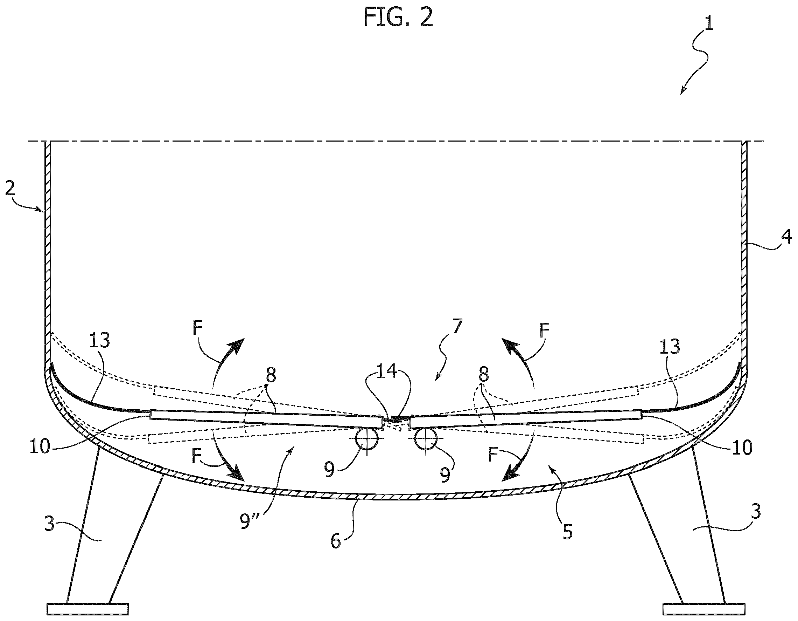

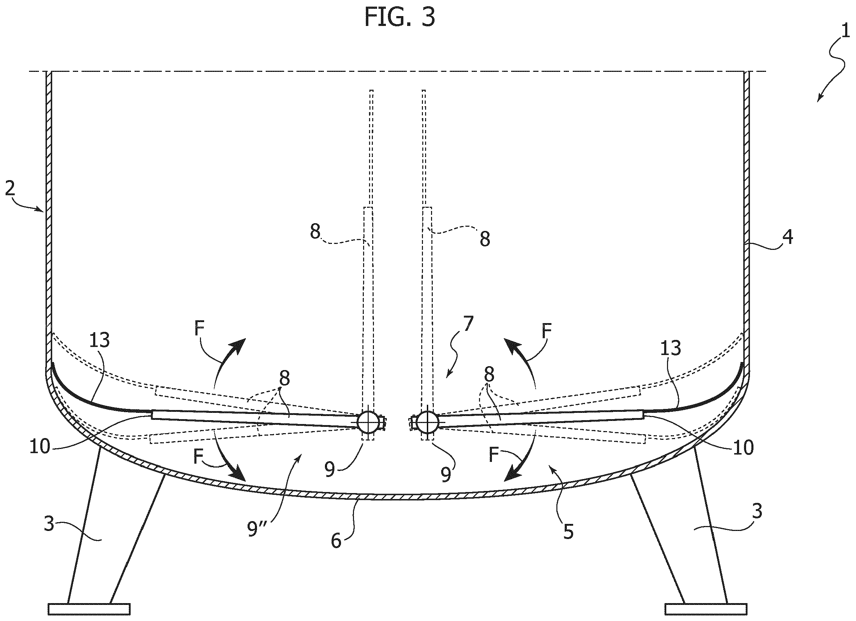

In one or more embodiments, as illustrated in Figures 1A,3, the shafts 9 are directly integrated into the body of the respective plate 8, along its internal end edge. In other embodiments, the shafts 9 extend adjacent to the upper or lower face of the plates 8 and are operatively connected to the body of the respective plate 8, for example along the internal end edge (as illustrated in Figures 2,4-7).

According to an additional feature, the apparatus 1 further includes at least one control member 11 configured to rotate a first shaft of said two shafts 9 and transmission means 12 configured to transmit the rotation command to a second shaft of said two shafts 9.

In one or more embodiments, as illustrated in Figure 1B, the control member 11 is an electrically driven gear motor configured to rotate one of the two shafts 9. The gear motor is operatively connected to the end portion of the shaft 9. However, the expert in the field will have no difficulty understanding that the present invention can advantageously also provide control members 11 of a different type than those indicated above, for example, a hydraulically driven actuator or a manually driven lever. The transmission means 12 can include a first gear wheel 12' integral and coaxial with a first shaft 9 operable with the control member 11. The first gear wheel 12' is kinematically connected with a second gear wheel 12'' integral and coaxial with a second shaft 9, such that following the activation of the control member 11, a simultaneous rotation in opposite directions of the two shafts 9 occurs. Note also that the present invention is equally applicable to the case where the shafts 9 are not kinematically connected to each other by transmission means 12, thus providing a pair of control members 11 to be actuated simultaneously or at different moments to control the movement of the two plates 8.

According to an important feature of the invention, the plates 8 are controllable in rotation to be arranged like a lid over the internal bottom area 5, to isolate the cloudy part of the liquid containing the so-called lees deposited on the bottom of the tank 2, and to prevent the cloudy part from mixing again with the clear part of the liquid. In one or more embodiments, the plates 8 can be controlled in rotation around the respective shafts 9 according to an angular motion with a substantially 90° amplitude, from an open vertical position (indicated with references 9' in the attached drawings) to a closed horizontal position (indicated with 9'' in the attached drawings), and vice versa. The plates 8 rotate according to opposite directions of rotation, in accordance with the rotation of the shafts 9, as indicated by the arrows F.

In the open vertical position 9', the main faces of the plates 8 extend substantially perpendicularly to the lower wall 6, thus avoiding being an obstacle between the upper and lower wall of the tank 2 and allowing the lees present in the upper part of the tank 2 to settle in the internal bottom area 5. In other words, in the open vertical position 9', the two plates 8 have upper faces facing each other and lower faces facing a respective part of the side wall 4.

In the closed horizontal position 9'', the two plates 8 extend horizontally like a lid over the internal bottom area 5 delimited below by the lower part 6, to isolate the cloudy part of the liquid containing the so-called lees deposited at the bottom of the tank 2. In other words, the two plates 8 have upper faces facing the upper wall of the tank 2 and lower faces facing the lower wall 6.

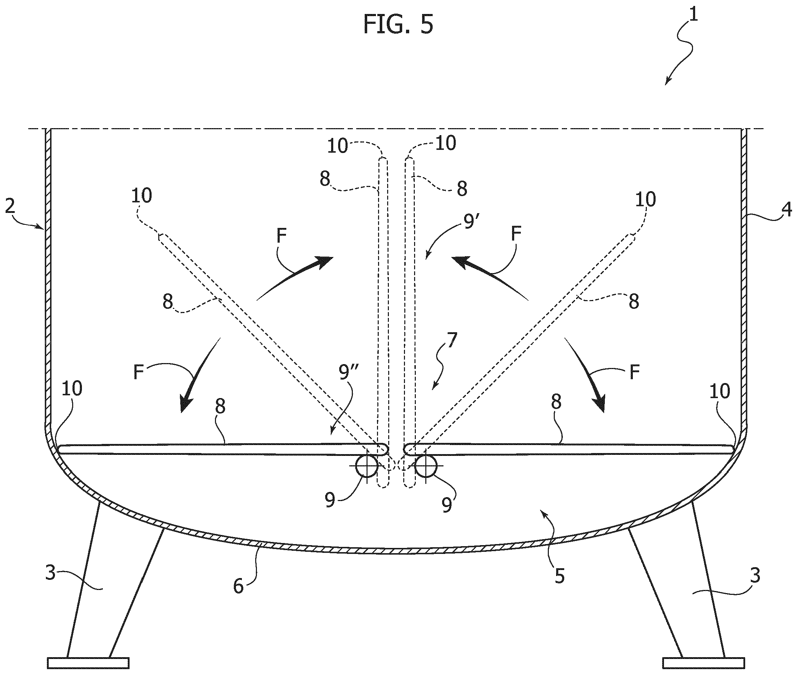

In one or more embodiments, as illustrated in Figure 5, in the closed horizontal position 9'', the respective external end edge 10 of each plate 8 is substantially in close proximity or directly in contact with a respective part of the side wall 4, to prevent the lees from passing between the external end edge 10 and the respective part of the side wall 4, rising above the covering plane created by the plates 8 in the closed position.

Referring to the specific embodiment illustrated in Figure 5, it is noted that in the closed horizontal position 9'', the external end edges 10 of the plates 8 come into contact with a respective lower corner of the tank 2 formed by the side wall 4 and the lower wall 6, thus defining the end stop of the plates 8 in the closed position. According to this closed horizontal position 9'', it will be appreciated that the plates 8 are arranged like a lid over the internal bottom area 5, thus determining a fixed volume of isolated cloudy liquid between the lower faces of the plates 8 and the lower wall 6 of the tank 2.

In an embodiment not illustrated, the locking of the plates 8 in a horizontal position can be determined, for example, by an end stop member associated with the shafts 9, allowing an angular movement of about 90°, from a horizontal position 9'' to a vertical position 9' .

Still referring to the embodiment illustrated in Figure 5, it is noted that the shafts 9 span the vertical mid-plane of the tank 2, positioned close to each other, so that in the closed position 9'' the internal end edges of the plates 8 are spaced from each other with a negligible mutual distance, to prevent the lees from easily rising above the covering plane through a central section of the tank between the two plates 8.

As mentioned previously, the plates 8 are controllable in rotation around the respective shaft 9 according to an angular motion around the respective shaft 9, from an open vertical position 9' to a closed horizontal position 9'', and vice versa. In one or more embodiments, to control the rotation of the shafts 9, the apparatus 1 may include an electronic control unit E (schematically illustrated in Figure 1B) configured and programmed to send command and control signals to the control member 11, to automatically control the angular motion from the open position to the closed position, and vice versa. In this context, the apparatus 1 may include a human-machine interface, such as a control panel, to allow the user to set different movement cycles of the plates 8.

Alternatively, instead of the electronic control unit E, at least one of said two shafts 9 may include signaling means (not illustrated) associated with a terminal part of the shaft 9 protruding outside the tank 2, to signal to the user the position of the plates 8 according to the rotation angle of the shafts 9.

According to a further feature of the invention illustrated purely by way of example in Figures 1A-4,6-9, each plate 8 includes at least one flexible portion 13 protruding along the external end edge 10, configured to come into contact with the respective part of the side wall 4 of the tank 2 during the terminal phase of the angular motion of the plates 8 from the open vertical position 9' to the closed horizontal position 9''. In one or more embodiments, the flexible portions 13 are made of elastically deformable material (e.g., rubber) so as to elastically deform following the progressive movement of the plates 8 when they are already in contact with the respective part of the side wall 4. The progressive deformation of the flexible portions 13 (illustrated in Figures 2,3) together with the rigid body of the plates 8 defines different operative positions like a lid defining respective isolated liquid volumes. Therefore, it will be appreciated that the autoclave according to the invention can provide a movable covering system 7 designed to define a variable volume of isolated liquid, depending on the amount of cloudy part of the liquid to be discarded.

According to a further feature of the invention illustrated purely by way of example in Figures 1A-2,4,6-9, each plate 8 includes a respective auxiliary portion 14 spaced along its internal end edge. Note also that such auxiliary portions 14 can be implemented in the embodiment illustrated in Figure 5. The auxiliary portions 14 are arranged to come into mutual contact in the closed horizontal position 9'' of the plates 8, to form a barrier in the central area between the two plates 8 that prevents the cloudy part of the liquid from rising in the central space between the two plates 8 arranged like a lid. At least one of the auxiliary portions 14 is preferably made of elastically deformable material.

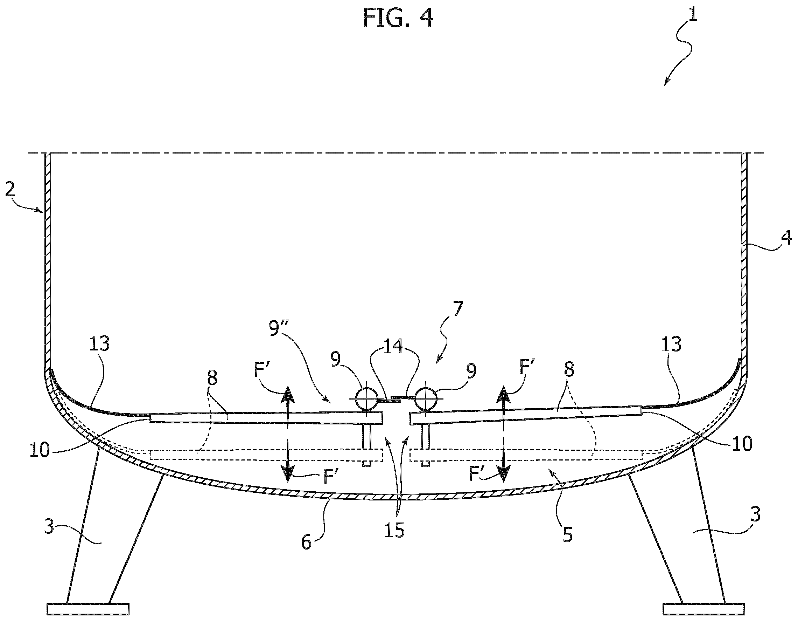

According to a further feature of the invention illustrated purely by way of example in Figure 4, the movable covering system 7 can include a telescopic system 15 designed to vary the prominence of the covering plane formed by the plates 8, along the vertical direction of the tank 2. In this way, the plates 8 like a lid can be advantageously brought closer or moved away from the lower wall 6 (as indicated by the arrows F'), thus determining different volumes of isolated liquid, according to the amount of cloudy part of the liquid to be discarded.

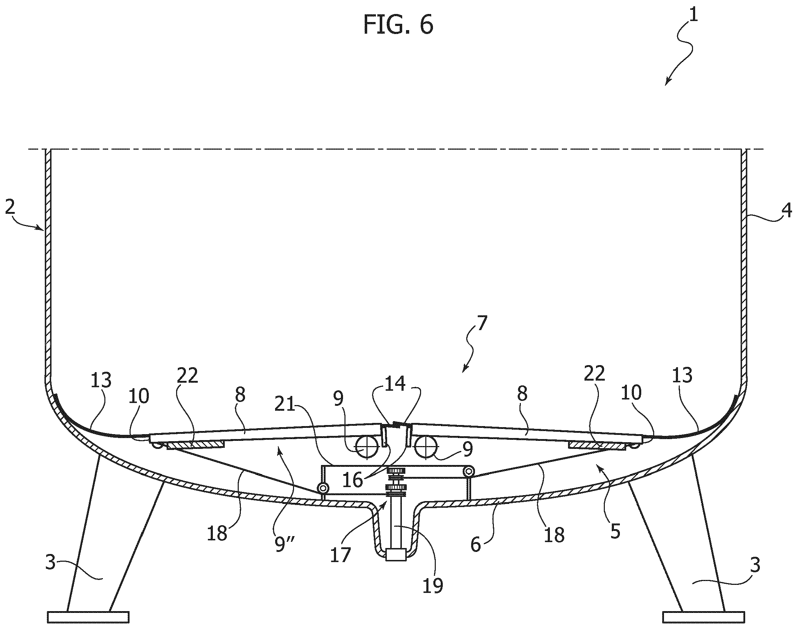

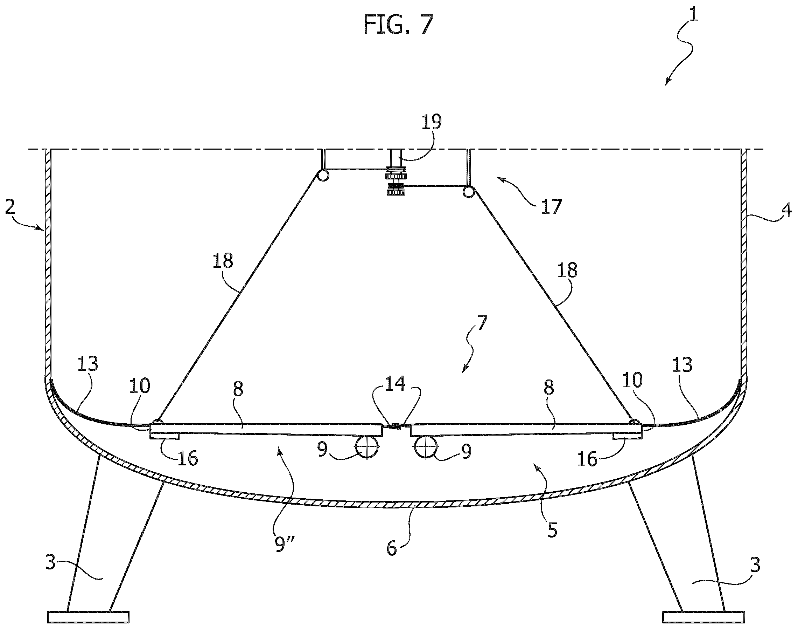

According to a further feature of the invention illustrated purely by way of example in Figures 6,7, each plate 8 can include a ballast 16, to allow the plates 8 to autonomously assume the open vertical position 9' or the closed horizontal position 9''. In this regard, note that in Figure 6 the two ballasts 16 extend along the internal end edges of the plates 8, to bring the plates 8 to the open vertical position 9'. In Figure 7, the two ballasts 16 extend near the external end edges 10, for example along an external terminal portion of the lower face of each plate 8, to bring the plates 8 to the closed horizontal position 9''. According to an additional feature not illustrated, in association with the ballasts 16, each plate 8 may include an elastic spring device, such as a torsion spring, to assist the work of the ballasts 16 in autonomously bringing the plates 8 to the open vertical position 9' or the closed horizontal position 9''.

According to a further feature, the plates 8 may include air tanks 22 arranged near the external end edges 10, for example along an external terminal portion of the lower face of each plate 8, or internally to the plates themselves, so that they tend to bring the plates themselves to the open position 9'.

According to a further feature, illustrated purely by way of example in Figures 6-9, the plates 8 may include a cable system 17 operable to move the plates 8 from the normal rest position assumed due to the arrangement of the ballasts 16, towards the open vertical position 9' or the closed horizontal position 9''. The cable system 17 may include:
- at least one cable 18 for each plate 8 having a terminal end connected to a respective plate 8, for example near the external end edges 10,
- at least one winding member 19 connected to the connecting cables 8 and operable in rotation around its own axis, by means of a control member 11, to wind the connecting cables 18 around it. The control member 11 may be, for example, a gear motor or a manual actuation member. Note also that the apparatus may be equipped with two winding members 11, each associated with a respective plate 8.

In one or more embodiments, the cable system 17 includes a cable 18 for a first plate 8 and a transmission system (e.g., a gear mechanism) that transmits the rotation movement from said first plate to the second plate.

The winding member 19 may include a main body shaped like a pin directed substantially along the vertical direction of the tank 2, and a pair of spacer members mounted on the pin to prevent the winding cables 18 of the respective plate 8 from tangling during winding.

Additionally, the system 17 may include a plurality of pulleys mounted inside the tank, for example on the lower wall 6, to guide the path of the cables 18 from the plates 8 to the winding member 19.

To limit the volatility of the lees during the winding phases of the cables 18, the winding member 19 may be overlaid by a sheet 21 that limits the deposition of the lees in the area affected by the winding operations (fig.6). The same sheet could also house the pulleys.

In other embodiments, instead of the winding member 19, the system 17 may include an extractable rod connected to the cables 18 that, coming out of its seat in contact with the tank, pulls the cables 18 connected to the plates 8.

According to the embodiment illustrated in Figure 6, in which the two ballasts 16 cause the natural movement of the plates 8 to the open vertical position 9', the winding member 19 is placed at the bottom of the tank 2 and the terminal ends of the cables 18 are connected to a portion of the lower face of the respective plate 8.

According to the embodiment illustrated in Figure 7, in which the two ballasts 16 cause the natural movement of the plates 8 to the closed horizontal position 9'', the winding member 19 is placed inside the tank 2 above the plates 8 in the closed position (for example, connected to the upper wall of the tank 2), and the terminal ends of the cables 18 are connected to a portion of the upper face of the respective plate 8.

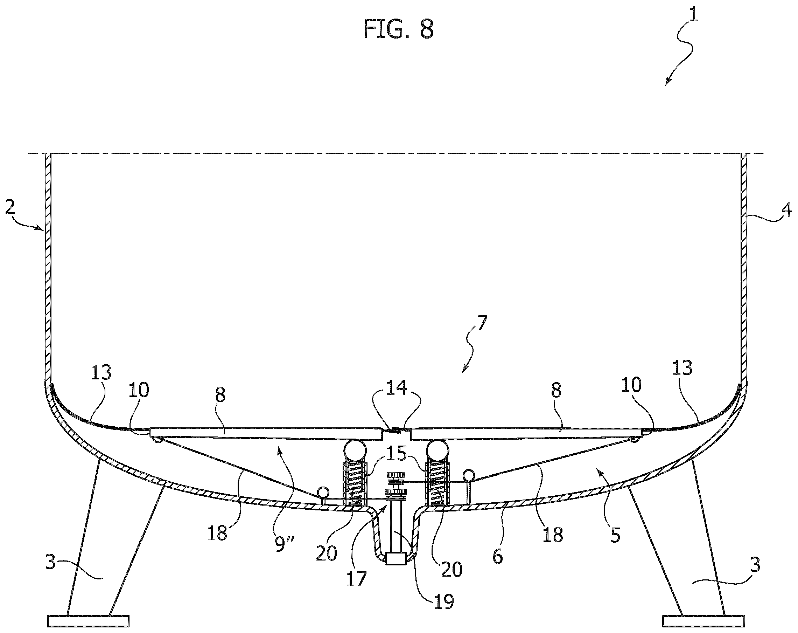

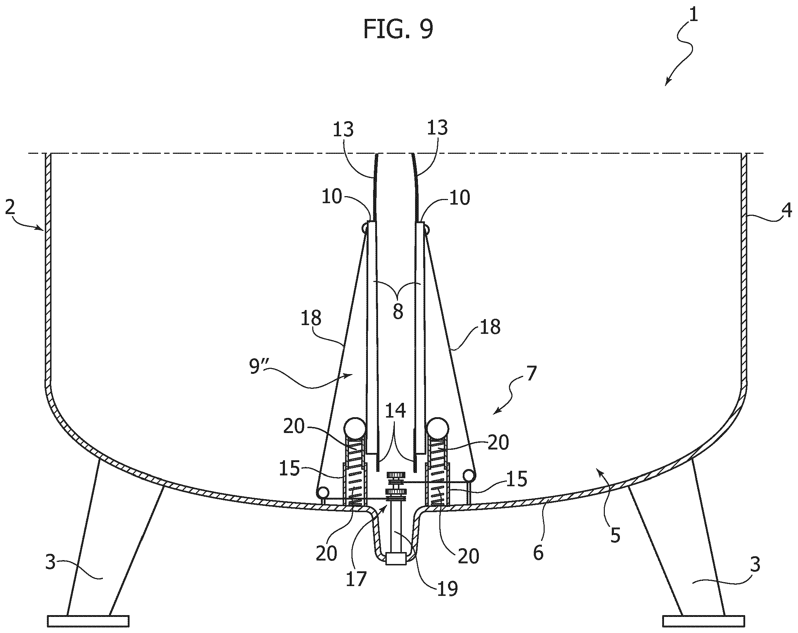

As mentioned previously, the movable covering system 7 may include a telescopic system 15 designed to vary the prominence of the covering plane formed by the plates 8, along the vertical direction of the tank 2. In this way, the plates 8 like a lid can be advantageously brought closer or moved away from the lower wall 6 (as indicated by the arrows F'), thus determining different volumes of isolated liquid, according to the amount of cloudy part of the liquid to be discarded. In this regard, as illustrated in Figures 8,9, the telescopic system 15 is made using a pair of cylindrical spiral elastic devices 20, each associated with a respective plate 8. In one embodiment, the devices 20 have a base portion constrained to the bottom wall 6 and a terminal portion in contact with the respective shaft 9. The elastic devices 20 are resistant to an axially applied compression, to assume different operative positions in order to modulate the volume of isolated liquid with the plates in the closed horizontal position. Naturally, as already discussed previously, the cable system 17 can be operated to set different operative positions of the plates 8.

## Claims

1. Apparatus (1) for the production of fermented or refermented beverages, with or without the presence of carbon dioxide, comprising:
- a tank (2) defining a side wall (4) with curvilinear internal surfaces and an internal bottom area (5) delimited at the bottom by a lower wall (6) of said tank (2),
- a movable covering system (7) arranged inside the tank (2) and configured to isolate the liquid contained into the internal bottom area (5),
**characterized in that**:
- said movable covering system (7) comprising two rigid plates (8) each having an overall shape defining a respective external end edge (10),
- said plates (8) being controllable in rotation around respective axial shafts (9) according to an angular motion, between an open vertical position (9') in which the two plates (8) extend substantially perpendicular to the lower wall (6), and a closed horizontal position (9'') in which the two plates (8) extend horizontally like a lid over the internal bottom area (5), with the respective external end edge (10) substantially close to or at contact with a respective part of said side wall (4), so as to form a covering plane over the internal bottom area (5) and define an isolated volume of liquid between the covering plane and the lower wall (6),
- the plates (8) being controllable to isolate liquid cloudy part containing so-called lees deposited on the bottom of the tank (2), and to prevent the cloudy part from mixing again with liquid clear part.

2. Apparatus (1) according to claim 1, wherein said movable covering system (7) is arranged to provide different closed positions (9'') substantially horizontal so as to vary the volume of liquid isolated between the covering plane provided by the plates (8) and the lower wall (6) of the tank (2).

3. Apparatus (1) according to claim 2, wherein each plate (8) comprises at least one flexible portion (13) protruding along the end edge (10), configured to come into contact with the respective part of side wall (4) of the tank (2) during the final phase of the angular motion of the plates (8) from the open vertical position (9') to the closed horizontal position (9'').

4. Apparatus (1) according to claim 3, wherein the flexible portions (13) are made of elastic deformable material, so as to deform elastically following the progressive movement of the plate (8) when the flexible portions (13) come into contact with the respective part of the side wall (4).

5. Apparatus (1) according to any of claims 2-4, wherein the movable covering system (7) comprises a telescopic system (15) adapted for varying the prominence of the covering plane formed by the sheets (8), along the vertical direction of the tank (2).

6. Apparatus (1) according to any of the previous claims, comprising a cable system (17) operable for moving the plates (8) towards the open vertical position (9') or the closed horizontal position (9''), including at least one cable (18) for at least one plate (8), having a terminal end connected to the respective plate (8).

7. Apparatus (1) according to any of the previous claims, comprising an electronic control unit (E) configured and programmed to send command and control signals to automatically control the angular motion of the plates (8) from the open position to the closed positions, and vice versa.

8. Apparatus (1) according to any of the previous claims, wherein at least one sheet (8) includes a respective auxiliary flexible portion (14) spaced along an internal end edge thereof, provided to come into mutual contact with the other plate (8) in the closed horizontal position, so as to form a barrier at a central area between the two plates (8) which prevents the dirty part of the liquid from rising through the central area between the two plates (8) arranged like a lid.

9. Method for the production of fermented or refermented beverages with or without the presence of carbon dioxide, comprising the following steps:
- providing an apparatus (1) according to claim 1,
- filling the tank (2) with a liquid to be processed,
- driving said movable covering system (7),
- driving in rotation the plates (8) to achieve a closed horizontal position (9''), so as to form a covering plane over the internal bottom area (5) and define an isolated volume of liquid between the covering plane and the lower wall (6).

10. Method according to claim 9, comprising:
- providing said movable covering system (7) so as to provide different closed positions (9'') substantially horizontal,
- driving in rotation the plates (8) to vary the volume of isolated liquid between the covering plane created by the plates (8) in the closed horizontal position and the lower wall (6) of the tank (2).

## Patentansprüche

1. Vorrichtung (1) zur Herstellung von fermentierten oder refermentierten Getränken, mit oder ohne Anwesenheit von Kohlendioxid, umfassend:
- einen Tank (2), der eine Seitenwand (4) mit gekrümmten Innenflächen und einen inneren Bodenbereich (5) definiert, der unten durch eine untere Wand (6) des besagten Tanks (2) begrenzt wird,
- ein bewegliches Abdecksystem (7), das innerhalb des Tanks (2) angeordnet und konfiguriert ist, um die in dem inneren Bodenbereich (5) enthaltene Flüssigkeit zu isolieren,
**dadurch gekennzeichnet, dass**:
- das besagte bewegliche Abdecksystem (7) zwei starre Platten (8) umfasst, die jeweils eine Gesamtform aufweisen, die eine jeweilige äußere Endkante (10) definiert,
- die besagten Platten (8) um jeweilige axiale Wellen (9) gemäß einer Winkelbewegung zwischen einer offenen vertikalen Position (9'), in der sich die beiden Platten (8) im Wesentlichen senkrecht zur unteren Wand (6) erstrecken, und einer geschlossenen horizontalen Position (9'') steuerbar sind, in der sich die beiden Platten (8) horizontal wie ein Deckel über dem inneren Bodenbereich (5) erstrecken, wobei die jeweilige äußere Endkante (10) im Wesentlichen nahe an oder in Kontakt mit einem jeweiligen Teil der besagten Seitenwand (4) ist, um so eine Abdeckebene über dem inneren Bodenbereich (5) zu bilden und ein isoliertes Flüssigkeitsvolumen zwischen der Abdeckebene und der unteren Wand (6) zu definieren,
- die Platten (8) steuerbar sind, um einen flüssigen trüben Teil, der sogenannte Hefeablagerungen enthält, die auf dem Boden des Tanks (2) abgelagert sind, zu isolieren und zu verhindern, dass sich der trübe Teil wieder mit dem flüssigen klaren Teil vermischt.

2. Vorrichtung (1) nach Anspruch 1, wobei das besagte bewegliche Abdecksystem (7) angeordnet ist, um verschiedene im Wesentlichen horizontale geschlossene Positionen (9'') bereitzustellen, um so das zwischen der von den Platten (8) bereitgestellten Abdeckebene und der unteren Wand (6) des Tanks (2) isolierte Flüssigkeitsvolumen zu variieren.

3. Vorrichtung (1) nach Anspruch 2, wobei jede Platte (8) mindestens einen flexiblen Abschnitt (13) umfasst, der entlang der Endkante (10) vorsteht, konfiguriert, um während der Endphase der Winkelbewegung der Platten (8) von der offenen vertikalen Position (9') in die geschlossene horizontale Position (9'') mit dem jeweiligen Teil der Seitenwand (4) des Tanks (2) in Kontakt zu kommen.

4. Vorrichtung (1) nach Anspruch 3, wobei die flexiblen Abschnitte (13) aus elastisch verformbarem Material bestehen, um sich der fortschreitenden Bewegung der Platte (8) folgend elastisch zu verformen, wenn die flexiblen Abschnitte (13) mit dem jeweiligen Teil der Seitenwand (4) in Kontakt kommen.

5. Vorrichtung (1) nach einem der Ansprüche 2-4, wobei das bewegliche Abdecksystem (7) ein Teleskopsystem (15) umfasst, das geeignet ist, die Höhe der von den Platten (8) gebildeten Abdeckebene entlang der vertikalen Richtung des Tanks (2) zu variieren.

6. Vorrichtung (1) nach einem der vorhergehenden Ansprüche, umfassend ein Seilsystem (17), das betätigbar ist, um die Platten (8) in die offene vertikale Position (9') oder die geschlossene horizontale Position (9'') zu bewegen, einschließlich mindestens eines Seils (18) für mindestens eine Platte (8), das ein mit der jeweiligen Platte (8) verbundenes Endstück aufweist.

7. Vorrichtung (1) nach einem der vorhergehenden Ansprüche, umfassend eine elektronische Steuereinheit (E), die konfiguriert und programmiert ist, um Befehl- und Steuersignale zu senden, um die Winkelbewegung der Platten (8) von der offenen Position in die geschlossenen Positionen und umgekehrt automatisch zu steuern.

8. Vorrichtung (1) nach einem der vorhergehenden Ansprüche, wobei mindestens eine Platte (8) einen jeweiligen Hilfsflexiblen Abschnitt (14) umfasst, der entlang einer inneren Endkante davon beabstandet ist, vorgesehen, um in der geschlossenen horizontalen Position mit der anderen Platte (8) in gegenseitigen Kontakt zu kommen, um so eine Barriere in einem zentralen Bereich zwischen den beiden Platten (8) zu bilden, die verhindert, dass der schmutzige Teil der Flüssigkeit durch den zentralen Bereich zwischen den beiden wie ein Deckel angeordneten Platten (8) aufsteigt.

9. Verfahren zur Herstellung von fermentierten oder refermentierten Getränken mit oder ohne Anwesenheit von Kohlendioxid, umfassend die folgenden Schritte:
- Bereitstellen einer Vorrichtung (1) nach Anspruch 1,
- Befüllen des Tanks (2) mit einer zu verarbeitenden Flüssigkeit,
- Antreiben des besagten beweglichen Abdecksystems (7),
- Drehantreiben der Platten (8), um eine geschlossene horizontale Position (9'') zu erreichen, um so eine Abdeckebene über dem inneren Bodenbereich (5) zu bilden und ein isoliertes Flüssigkeitsvolumen zwischen der Abdeckebene und der unteren Wand (6) zu definieren.

10. Verfahren nach Anspruch 9, umfassend:
- Bereitstellen des besagten beweglichen Abdecksystems (7), um so verschiedene im Wesentlichen horizontale geschlossene Positionen (9") bereitzustellen,
- Drehantreiben der Platten (8), um das Volumen der isolierten Flüssigkeit zwischen der von den Platten (8) in der geschlossenen horizontalen Position erzeugten Abdeckebene und der unteren Wand (6) des Tanks (2) zu variieren.

## Revendications

1. Appareil (1) pour la production de boissons fermentées ou refermentées, avec ou sans présence de dioxyde de carbone, comprenant :
- une cuve (2) définissant une paroi latérale (4) avec des surfaces internes curvilignes et une zone de fond interne (5) délimitée en partie inférieure par une paroi inférieure (6) de ladite cuve (2),
- un système de couverture mobile (7) disposé à l'intérieur de la cuve (2) et configuré pour isoler le liquide contenu dans la zone de fond interne (5),
**caractérisé en ce que** :
- ledit système de couverture mobile (7) comprend deux plaques rigides (8) ayant chacune une forme globale définissant un bord d'extrémité externe respectif (10),
- lesdites plaques (8) pouvant être commandées en rotation autour d'arbres axiaux respectifs (9) selon un mouvement angulaire, entre une position verticale ouverte (9') dans laquelle les deux plaques (8) s'étendent sensiblement perpendiculairement à la paroi inférieure (6), et une position horizontale fermée (9'') dans laquelle les deux plaques (8) s'étendent horizontalement comme un couvercle au-dessus de la zone de fond interne (5), avec le bord d'extrémité externe respectif (10) sensiblement proche ou en contact avec une partie respective de ladite paroi latérale (4), de manière à former un plan de couverture au-dessus de la zone de fond interne (5) et à définir un volume isolé de liquide entre le plan de couverture et la paroi inférieure (6),
- les plaques (8) pouvant être commandées pour isoler une partie trouble du liquide contenant ce que l'on appelle des lies déposées sur le fond de la cuve (2), et pour empêcher la partie trouble de se mélanger à nouveau avec la partie claire du liquide.

2. Appareil (1) selon la revendication 1, dans lequel ledit système de couverture mobile (7) est agencé pour fournir différentes positions fermées (9") sensiblement horizontales de manière à faire varier le volume de liquide isolé entre le plan de couverture fourni par les plaques (8) et la paroi inférieure (6) de la cuve (2).

3. Appareil (1) selon la revendication 2, dans lequel chaque plaque (8) comprend au moins une partie flexible (13) faisant saillie le long du bord d'extrémité (10), configurée pour entrer en contact avec la partie respective de la paroi latérale (4) de la cuve (2) pendant la phase finale du mouvement angulaire des plaques (8) de la position verticale ouverte (9') à la position horizontale fermée (9'').

4. Appareil (1) selon la revendication 3, dans lequel les parties flexibles (13) sont réalisées en un matériau élastique déformable, de manière à se déformer élastiquement suite au mouvement progressif de la plaque (8) lorsque les parties flexibles (13) entrent en contact avec la partie respective de la paroi latérale (4).

5. Appareil (1) selon l'une quelconque des revendications 2 à 4, dans lequel le système de couverture mobile (7) comprend un système télescopique (15) adapté pour faire varier la proéminence du plan de couverture formé par les plaques (8), le long de la direction verticale de la cuve (2).

6. Appareil (1) selon l'une quelconque des revendications précédentes, comprenant un système de câble (17) actionnable pour déplacer les plaques (8) vers la position verticale ouverte (9') ou la position horizontale fermée (9''), incluant au moins un câble (18) pour au moins une plaque (8), ayant une extrémité terminale connectée à la plaque respective (8).

7. Appareil (1) selon l'une quelconque des revendications précédentes, comprenant une unité de commande électronique (E) configurée et programmée pour envoyer des signaux de commande et de contrôle pour commander automatiquement le mouvement angulaire des plaques (8) de la position ouverte aux positions fermées, et vice versa.

8. Appareil (1) selon l'une quelconque des revendications précédentes, dans lequel au moins une plaque (8) inclut une partie flexible auxiliaire respective (14) espacée le long d'un bord d'extrémité interne de celle-ci, prévue pour entrer en contact mutuel avec l'autre plaque (8) dans la position horizontale fermée, de manière à former une barrière au niveau d'une zone centrale entre les deux plaques (8) qui empêche la partie sale du liquide de remonter à travers la zone centrale entre les deux plaques (8) disposées comme un couvercle.

9. Procédé pour la production de boissons fermentées ou refermentées avec ou sans présence de dioxyde de carbone, comprenant les étapes suivantes :
- fournir un appareil (1) selon la revendication 1,
- remplir la cuve (2) avec un liquide à traiter,
- entraîner ledit système de couverture mobile (7),
- entraîner en rotation les plaques (8) pour atteindre une position horizontale fermée (9''), de manière à former un plan de couverture au-dessus de la zone de fond interne (5) et à définir un volume isolé de liquide entre le plan de couverture et la paroi inférieure (6).

10. Procédé selon la revendication 9, comprenant :
- fournir ledit système de couverture mobile (7) de manière à fournir différentes positions fermées (9") sensiblement horizontales,
- entraîner en rotation les plaques (8) pour faire varier le volume de liquide isolé entre le plan de couverture créé par les plaques (8) dans la position horizontale fermée et la paroi inférieure (6) de la cuve (2) .
